# EUROPÄISCHE PATENTANMELDUNG

(11) **EP 2 053 714 A2**
(43) Veröffentlichungstag der Anmeldung: **29.04.2009**
(21) Anmeldenummer: 08010787.3
(22) Anmeldetag: 13.06.2008
(51) Int. Cl.: H02G 1/08, H02G 1/12

(54) **Verfahren und Vorrichtung zum Entfernen und Weiterbehandeln von biegsamen, strangförmigen Gegenständen aus ihren Nutzungs-Lagerorten**

(30) Priorität: 23.10.2007 DE 102007050926
(71) Anmelder: Bagela Baumaschinen GmbH & Co. KG, 24568 Kaltenkirchen (DE)
(72) Erfinder: Mundt, Karsten, 23936 Grevesmühlen (DE)
(74) Vertreter: Schupfner, Georg

(57) **Zusammenfassung**

Die Erfindung bezieht sich auf ein Verfahren und eine Vorrichtung zum Entfernen und Weiterbehandeln von biegsamen, strangförmigen Gegenständen (14), vorzugsweise von Kabeln und Rohren, aus ihren Nutzungs-Lagerorten mittels einer während der Behandlung stationären Halterung (1,2) mit drehend angetriebenen Rollen (6,7), die paarweise einen strangförmigen Gegenstand (14) zwischen sich klemmend erfassen und beim Drehen aus dem Nutzungs-Lagerort ziehen, wonach der herausgezogene, freigelegte, strangförmige Gegenstand (14) in Längsrichtung aufgeschlitzt, bei einem Kabel danach entmantelt und gegebenenfalls in Querrichtung durchtrennt dem Recyceln und Entsorgen zugeführt wird.

## Beschreibung

Die Erfindung bezieht sich auf ein Verfahren und eine Vorrichtung zum Entfernen und Weiterbehandeln von biegsamen, strangförmigen Gegenständen, vorzugsweise von Kabeln und Rohren, aus ihren Nutzungs-Lagerorten.

Im Erdreich oder in Schächten angeordnete Kabel oder Kunststoffrohre bestehen aus wertvollen Rohstoffen, wie Kupfer und Kunststoff. Wenn Kabel und Rohre nach dem Gebrauch nicht mehr benutzt werden, ist es sinnvoll, sie aus ihren Nutzungs-Lagerorten zu entfernen. Dazu ist es bekannt, sie mittels Zuggeräten, wie Traktoren oder anderweitigen Zugmaschinen, aus ihren Nutzungs-Lagerorten zu entfernen.

Aus der DE 201 11 251 U1 ist eine stationäre Vorrichtung bekannt, die Kabel aus dem Erdreich ziehen kann. Die Vorrichtung hat dazu in Zugrichtung hintereinander angeordnete Paare von Zugrollen, die das Kabel einklemmen und dann drehend angetrieben aus dem Erdreich herausziehen. Auf die Zugrollen folgt in der Zugrichtung ein Querschneider, der die auflaufenden Kabelabschnitte durchschneidet und das zu recycelnde Kabel so in leichter weiterverarbeitbare Stücke aufteilt.

Beim Durchschneiden wird das Kabel in seiner Gesamtheit mit der Ummantelung durchtrennt. Dieses Recycelverfahren hilft, die wertvollen Rohstoffe wiedergewinnbar zu machen. Solche Kabelstücke mit ihrer vollen Isolierung müssen zum Verschrotten geschreddert werden. Die unterschiedlichen Materialien werden dann durch Sieben, Absaugen und mittels Zyklonmagnetbändern getrennt. Der zu erzielende Schrottpreis ist jedoch wesentlich ungünstiger als wenn man blankes Material verkauft.

Bei Bleimantelkabeln kommt hinzu, dass sich in Schredderanlagen Kupfer- und Bleifragmente äußerst schlecht trennen lassen.

Es ist Aufgabe der Erfindung, ein universelles Verfahren und eine Vorrichtung zu schaffen, mit denen es möglich ist, Kabel und Kunststoffrohre je nach ihrem Aufbau direkt im Anschluss an den Vorgang des Herausziehens für den Recycelvorgang kostengünstiger aufzubereiten.

Die gestellte Aufgabe ist erfindungsgemäß gelöst mit einem Verfahren zum Entfernen und Weiterbehandeln von biegsamen, strangförmigen Gegenständen, vorzugsweise von Kabeln und Rohren, aus ihren Nutzungs-Lagerorten gemäß Anspruch 1 mittels während der Behandlung stationär angeordneter, eine Zugkraft ausübender, drehend angetriebener Rollen, die paarweise einen strangförmigen Gegenstand zwischen sich klemmend erfassen und beim Drehen aus dem Nutzungs-Lagerort ziehen, wonach der herausgezogene, freigelegte, strangförmige Gegenstand in Längsrichtung aufgeschlitzt wird.

In weiterer Ausgestaltung der Erfindung ist vorgesehen, dass bei einem mit einem Mantel versehenen strangförmigen Gegenstand nur der Mantel aufgeschlitzt und dieser danach bei einem Entmanteln entfernt wird.

Durch das Aufschneiden der Kabelummantelung wird es möglich, die Ummantelung durch Abstreifen zu entfernen. Ist es ein Einleiterkabel, dann liegt das Kupfer bereits frei. Das freigelegte Kupfer kann dann in großen Längen oder in Abschnitte geschnitten der weiteren Behandlung zugeführt werden.

Nach einer weiteren Ausgestaltung der Erfindung ist vorgesehen, dass bei einem rohrförmigen, strangförmigen Gegenstand die Rohrwand durchschnitten wird. Bei Rohren, vorzugsweise Kunststoffrohren, kann bei Bedarf von oben und unten geschnitten werden.

Nach einer weiteren Ausgestaltung der Erfindung ist vorgesehen, dass die strangförmigen Gegenstände, bei Bedarf in Querrichtung durchtrennt, dem Recyceln und Entsorgen zugeführt werden. Beim nachfolgenden Querschneiden zerfällt das Rohr in gut handhabbare Teilstücke.

Nach einer weiteren Ausgestaltung der Erfindung ist vorgesehen, dass wenigstens ein Rollenpaar mit wenigstens einem mit ihm umlaufenden Trennmesser versehen ist, mit dem der gerade gezogene, strangförmige Gegenstand in Längsrichtung aufgeschlitzt wird, worauf bei einem strangförmigen Gegenstand mit einem Mantel der durch das Aufschlitzen geöffnete Mantel entfernt wird. Das umlaufende Trennmesser kann bei einem Kabel den Kabelmantel in voller Tiefe öffnen. Das Entfernen des aufgeschlitzten Mantels kann dann durch Wegbiegen oder Abstreifen erfolgen.

Nach einer weiteren Ausgestaltung der Erfindung ist vorgesehen, dass für den Fall, dass beim Aufschlitzen weitere strangförmige Gegenstände mit Mänteln freigelegt werden, diese wiederum von Rollenpaaren mit umlaufenden Trennmessern in weiteren Nachfolgevorrichtungen aufgeschlitzt und danach entmantelt werden. Diese Verfahrensweise bietet sich beispielsweise bei Mehrleiterkabeln an, bei denen die einzelnen Kabelstränge im Gesamtkabel nochmals isolierende Mäntel haben. In den Nachfolgehalterungen werden auch diese Mäntel entfernt, so dass beispielsweise das Kupfer völlig freigelegt ist.

Nach einer weiteren Ausgestaltung der Erfindung ist vorgesehen, dass von wenigstens einem quer zur Strangrichtung angeordneten Trennmesser die freigelegten, strangförmigen Gegenstände abschnittsweise durchteilt werden. Dieses nachfolgende, quer zur Strangrichtung angeordnete Trennmesser kann entweder die freigelegten Kupferstränge oder aber auch das ganze Kabel durchtrennen, um so kurze, recycelbare Kabelabschnitte zu erhalten.

Eine Vorrichtung zur Durchführung des Verfahrens ist gekennzeichnet durch den weiteren unabhängigen Anspruch, wonach eine während der Behandlung stationäre Vorrichtung, in der zwischen unteren und oberen Rollen ein strangförmiger Gegenstand einklemmbar und von den drehend angetriebenen unteren und gegebenenfalls auch oberen Rollen aus seinem Nutzungs-Lagerort ziehbar ist, wobei Schneidewerkzeuge vorgesehen sind, mittels der ein herausgezogener, freigelegter, strangförmiger Gegenstand beim Herausziehen in Längsrichtung aufschneidbar ist.

Nach einer weiteren Ausgestaltung der Erfindung ist vorgesehen, dass bei einem mit einem Mantel versehenen, strangförmigen Gegenstand der Mantel vom Schneidwerkzeug in Form des Trennmessers zum späteren Entfernen aufschneidbar ist.

Ganz gleich von welcher Art die Ummantelung bei einem Kabel ist, durch das Aufschneiden der Ummantelung wird es möglich, den aufgeschlitzten Mantel durch Abstreifen zu entfernen. Bei einem Einleiterkabel liegt das Kupfer dann bereits frei. Das freigelegte Kupfer kann in großen Längen oder in Abschnitte geschnitten der weiteren Behandlung zugeführt werden.

Nach einer weiteren Ausgestaltung der Erfindung ist vorgesehen, dass bei einem rohrförmigen strangförmigen Gegenstand die Rohrwand durchschneidbar ist. Bei Rohren, vorzugsweise Kunststoffrohren, kann das Rohr oben und unten geschlitzt und aufgebrochen werden, um in Teilstücke zu zerfallen.

Nach einer weiteren Ausgestaltung der Erfindung ist vorgesehen, dass eine Querschneidvorrichtung vorgesehen ist, mit der der strangförmige Gegenstand bei Bedarf quer zur Zugrichtung des Gegenstandes durchtrennbar ist.

Nach einer weiteren Ausgestaltung der Erfindung ist vorgesehen, dass in einem Kerngerät in der Förderungsfolge hintereinander wenigstens zwei Paare von unteren und oberen Rollen vorgesehen sind, von denen wenigstens die unteren antreibbar sind, und von denen von wenigstens einem Paar eine oder beide Rollen mit wenigstens einem Rollenmesser ausgerüstet sind, mit dem die strangförmigen Gegenstände in Längsrichtung beim Ziehvorgang aufschlitzbar sind. Das Trennmesser läuft also mit den Rollen um und führt selbsttätig einen Längsschnitt aus.

Nach einer weiteren Ausgestaltung der Erfindung ist vorgesehen, dass die unteren und oberen Rollen wenigstens eines Rollenpaares Aufnahmemulden für die Aufnahme und das Einschließen des strangförmigen Gegenstandes aufweisen.

Nach einer weiteren Ausgestaltung der Erfindung ist vorgesehen, dass die Rollen an den Muldenwänden mit Greifstrukturen, wie beispielsweise Quer- und Längsrillen sowie Noppen, versehen sind. Dadurch wird die Griffigkeit der ziehenden Rollen verbessert.

Das Kerngerät ist bei Bedarf eine selbstständige Arbeitseinheit.

Nach einer weiteren Ausgestaltung der Erfindung ist vorgesehen, dass sich in Nachfolgevorrichtungen an die Rollenpaare weitere Rollenpaare anschließen, die den aufgeschlitzten und in Teilgegenstände aufgespaltenen Gegenstand nochmals zur Entmantelung in Längsrichtung aufschlitzen. Sind die einzelnen Stränge eines Kabels durch ein Aufbrechen der äußeren Ummantelung freigelegt, können mit den nachfolgenden, jedem Einzelstrang zugeordneten Nachfolgevorrichtungen auch die Einzelstränge sinnvoll entmantelt werden.

Nach einer weiteren Ausgestaltung der Erfindung ist vorgesehen, dass in der Förderungsfolge nach dem Kerngerät eine Entmantelungsstation vorgesehen ist. Diese Entmantelungsstation kann maschinell oder von Hand arbeiten.

Nach einer weiteren Ausgestaltung der Erfindung ist vorgesehen, dass eine maschinelle Entmantelungsstation ein Entmantelungsrad mit einer Hohlkehle aufweist, mit dem der aufgeschlitzte Mantel vom strangförmigen Gegenstand wegdrückbar ist.

Nach einer weiteren Ausgestaltung der Erfindung ist vorgesehen, dass eine Querschneidestation vorgesehen ist. Diese Querschneidestation mit einem Querschneider wird bei Bedarf eingesetzt. Entweder arbeitet er erst, wenn bei einem Kabel das Kupfer freigelegt ist, oder er zerschneidet das noch ummantelte Kabel.

Nach einer weiteren Ausgestaltung der Erfindung ist vorgesehen, dass der Querschneider der Querschneidestation vorzugsweise auf das Kerngerät und die Entmantelungsstation folgend angeordnet ist.

Nach einer weiteren Ausgestaltung der Erfindung ist vorgesehen, dass in dem Kerngerät die unteren Rollen in einem unteren Rollenhalter gelagert sind und die oberen Rollen in einem oberen Gegenrollenhalter gelagert sind, der vom unteren Rollenhalter lös- und abnehmbar ist. Dies ist eine kompakte Ausführungsform, die als Kerngerät allein oder integriert in der Kombinationsvorrichtung und in verschiedenen Dimensionen einsetzbar ist.

Nach einer weiteren Ausgestaltung der Erfindung ist vorgesehen, dass die Höhenlage der Rollen im Gegenrollenhalter gegenüber dem unteren Rollenhalter einstellbar ist. Damit ist die Vorrichtung an verschiedene Kabel- oder Rohrdurchmesser anpassbar.

Nach einer weiteren Ausgestaltung der Erfindung ist vorgesehen, dass die Achsen der oberen Rollen des Gegenrollenhalters an jeweils den einen Enden von Trägern angeordnet sind, während die anderen Enden zusammengeführt sind und an einem mittigen Gelenk angreifen, das lösbar mit dem unteren Rollenhalter verbunden ist.

Nach einer weiteren Ausgestaltung der Erfindung ist vorgesehen, dass eine in ihrer Länge veränderbare Spannvorrichtung vorgesehen ist, die die Träger im Bereich der Achsen der Rollen im Gegenrollenhalter verbindet, wobei durch eine Längung der Spannvorrichtung die oberen Rollen mehr an die unteren Rollen annäherbar und bei einer Verkürzung die oberen Rollen mehr von den unteren Rollen entfernbar sind. Die Andruckkraft ist damit auf einfache Weise einstellbar.

Nach einer weiteren Ausgestaltung der Erfindung ist vorgesehen, dass der Rollenhalter und der Gegenrollenhalter gemeinsam mit den Rollen als einzeln handhabbare Einheit ausgebildet sind.

Nach einer weiteren Ausgestaltung der Erfindung ist vorgesehen, dass die Entmantelungsstation von einem Gestell getragen wird, das an den Grubenrand stellbar ist. Das Gestell kann ein separat antreibbares Rad aufweisen, z.B. in Form eines Kettantriebs, in das die Glieder eine Kette einlegbar sind, um den stangförmigen Gegenstand aus der Grube zu ziehen und nachfolgend in die Entmantelungsstation einzufädeln. Entmantelungsstation und Gestell können Haltevorrichtungen, wie Querstreben oder Seile, aufweisen, mit denen die Entmantelungsstation, z.B. an dem Grubenrand, festgelegt wird.

Die Erfindung wird anhand der Zeichnungen näher erläutert. Es zeigen:
Fig. 1 eine Vorrichtung zum Entfernen und Weiterbehandeln von nicht mehr genutzten, biegsamen, strangförmigen Gegenständen, wie Kabeln und Rohren, aus ihren Nutzungs-Lagerorten mit einem Zug- und Schubgerät für diese Gegenstände, wobei diese strangförmigen Gegenstände von Rollen gefördert und im Falle von Kabeln die Mäntel aufgeschlitzt sowie dann entfernt werden, während im Falle von Rohren die Rohrwandungen aufgeschlitzt werden, wonach bei Bedarf die freigelegten strangförmigen Gegenstände in Stücke geschnitten werden,
Fig. 2 eine erweiterte Vorrichtung, bei der die einzelnen Kabelstränge, die nach dem Aufschlitzen in der Vorrichtung nach Fig. 1 freigelegt wurden, in zusätzlichen Entmantelungsstationen ihrerseits entmantelt werden, um so das enthaltene Metall, vorzugsweise Kupfer, freizulegen,
Fig. 3 eine Ansichtsdarstellung allein eines Rollenpaares in Zugrichtung mit einem Beispiel für das Anordnen eines Rollenmessers in einer Rolle mit Aufnahmemulde, wobei eine Andrückrolle den strangförmigen Gegenstand in die Aufnahmemulde drückt,
Fig. 4 eine abgewandelte Ansichtsdarstellung in Zugrichtung nach Fig. 3 mit einem Beispiel, bei dem das Rollenmesser in der Andrückrolle angeordnet ist,
Fig. 5 eine weiter abgewandelte Ansichtsdarstellung nach Fig. 3 in Zugrichtung, wobei die obere und die untere Rolle eines Rollenpaares mit Rollenmessern versehen sind,
Fig. 6 eine Ansichtsdarstellung eines Rollenpaares in Zugrichtung, das bevorzugt den strangförmigen Gegenstand aus dem Boden oder einem Schacht zieht und deshalb keine Rollenmesser trägt.

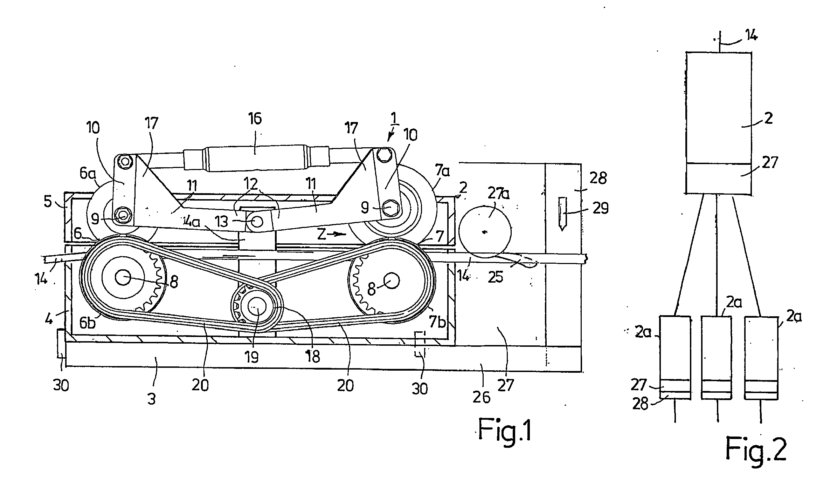

Fig. 1 zeigt eine Kombinationsvorrichtung 1, mit der verschiedene Handhabungen an einem strangförmigen Gegenstand 14, wie einem Kabel oder einem biegsamen Rohr, beispielsweise an einem Kunststoffrohr, vorgenommen werden.

Das Kerngerät 2 dieser Kombinationsvorrichtung, welches auch getrennt als selbständige Einheit einsetzbar ist, dient dem Herausziehen eines Kabels oder eines Kunststoffrohres aus dem Erdreich oder einem Kabelschacht in Zugrichtung Z. Dieses Kerngerät 2 ist auf einen Grundrahmen 3 aufgesetzt und mit ihm mittels angedeuteter Verbindungen 30 verbindbar; es ist aber zur eigenständigen Verwendung auch von dem Grundrahmen lösbar.

Das Kerngerät 2 besteht aus einem unteren Rollenhalter 4 und einem oberen Gegenrollenhalter 5. In der Zeichnung sind die Halter 4 und 5 selbst nur im Hintergrund zu sehen. Im Vordergrund ist bei entfernten vorderen Halterteilen der Mechanismus dargestellt. Dieser Mechanismus besteht aus Rollenpaaren 6 mit den Rollen 6a und 6b, sowie 7 mit den Rollen 7a und 7b. Die Achsen 8 der Rollen 6b und 7b sind in dem unteren Rollenhalter 4 gelagert. Die Achsen 9 der oberen Rollen 6a und 7a sind an nach rechts und links weisenden Enden 10 von Trägern 11 gelagert. Die mittigen Enden 12 der Träger 11 sind zu einem Gelenk 13 geführt, das mit dem Rollenhalter 4 mittels einer Verbindung 4a lösbar verbunden ist.

Ein Ende des strangförmigen Gegenstandes 14, beispielsweise eines Kabels oder eines Kunststoffrohres, ist aus dem Erdboden oder einem Schacht herausgehoben. Der strangförmige Gegenstand 14 wird bei abgenommenem Gegenrollenhalter 5 auf die unteren Rollen 6b und 7b aufgelegt. Er liegt in deren Aufnahmemulden 15. Nach dem Einlegen wird der Gegenrollenhalter 5 auf den unteren Rollenhalter 4 aufgesetzt und daran befestigt.

Der Gegenrollenhalter 5 ist mit einer in ihrer Länge veränderbaren Spannvorrichtung 16 versehen. Diese Spannvorrichtung 16 verbindet die Träger 11 im Bereich 17 der Achsen 9 der Rollen 6a und 7a im Gegenrollenhalter 5. Durch eine Längung der Spannvorrichtung 16 lassen sich die oberen Rollen 6a und 7a mehr an die unteren Rollen 6b und 7b andrücken. Bei einer Verkürzung der Spannvorrichtung 16 lässt sich der Andruck verringern.

Die Rollenpaare, bestehend aus den Rollen 6a, 6b und 7a, 7b dienen dem Ziehen am strangförmigen Gegenstand 14. Dazu werden die Rollen 6b und 7b von einem Antrieb 18 angetrieben. Der Antrieb 18 besteht aus einem nicht dargestellten Motor, der eine Welle 19 antreibt. Zahnriemen 20 übertragen die Drehbewegungen der Welle 19 auf die Achsen 8. Es ist selbstverständlich möglich, bei Bedarf auch die oberen Rollen 6a und 7a anzutreiben. Alle Rollen, 6a und 6b, sowie 7a und 7b, können also bei Bedarf als Zugrollen eingesetzt werden.

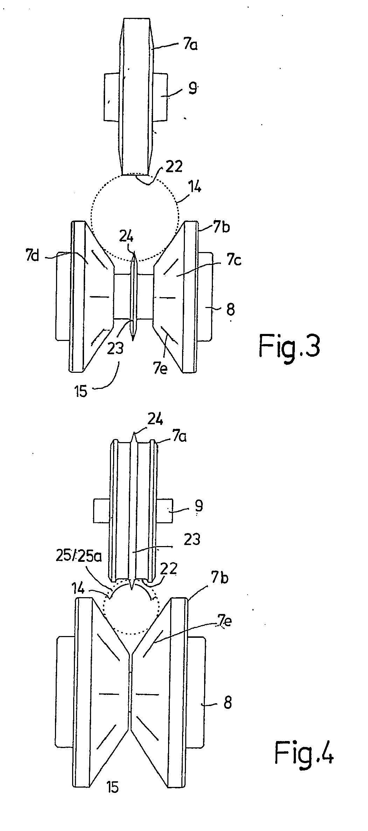

In Fig. 3 ist eine Ansicht in Zugrichtung Z auf das Rollenpaar 7a, 7b des Kerngerätes 2 dargestellt. Man erkennt die Rollen 7a und 7b. Die obere Rolle 7a drückt mit einer planen Umfangsfläche 22 gegen den herausgezogenen, strangförmigen Gegenstand 14. Die untere Rolle 7b hat eine Aufnahmemulde 15, die zwischen konischen Rollenflanschen 7c und 7d gebildet ist. Zwischen den Rollenflanschen 7c und 7d befindet sich ein Rollenmesser 23. Wie man erkennt, schneidet die Schneide 24 des Rollenmessers 23 in den strangförmigen Gegenstand 14 ein.

Ist der strangförmige Gegenstand 14 ein Kabel mit einem Mantel 25, dann wird vorzugsweise nur der Mantel 25 so aufgeschnitten, dass er, wie aus Fig. 1 ersichtlich ist, abgezogen oder anderweitig entfernt werden kann. Ist der strangförmige Gegenstand 14 ein Kunststoffrohr, dann wird die Rohrwand 25a durchschnitten.

Um die Zugfähigkeit zu erhöhen, sind die Rollenflanschen 7c und 7d mit Greifstrukturen 7e, wie beispielsweise Quer- und Längsrillen sowie Noppen, versehen. Auch die oberen Rollen 6a und 7a können Aufnahmemulden aufweisen. Das Kerngerät 2 ist so aufgebaut, dass die Rollen 6 und 7 ausgetauscht werden können, um den verschiedenen Kabelgestaltungen Rechnung zu tragen. Die Rollen 6, 7 können aus Kunststoff oder anderen geeigneten Materialen bestehen.

Fig. 4 zeigt eine Variante des Rollenpaares 7a, 7b. Die obere Rolle 7a drückt mit einer planen Fläche 22 gegen den strangförmigen Gegenstand 14. Diesmal hat die Rolle 7a in der Mitte das Rollenmesser 23, das mit seiner Schneide 24 in den strangförmigen Gegenstand 14 einschneidet.

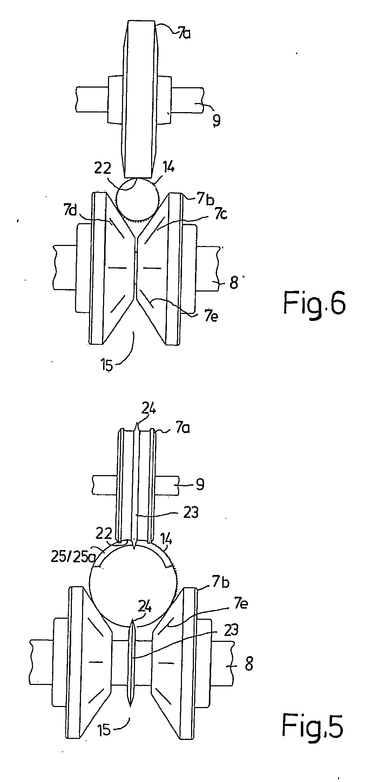

Fig. 5 zeigt eine weitere Variante des Rollenpaares 7a, 7b. Die obere Rolle 7a ist an der planen Fläche 22 wieder mit einem Rollenmesser 23 versehen, das gegen den strangförmigen Gegenstand 14 drückt. Das Rollenmesser 23 der Rolle 7a schneidet mit seiner Schneide 24 in den strangförmigen Gegenstand 14 ein. Auch die Rolle 7b zwischen den Rollenflanschen 7c und 7d ist mit einem Rollenmesser 23 versehen. Wie man erkennt, schneiden also die Schneiden 24 beider Rollenmesser 23 der Rollen 7a und 7b in den strangförmigen Gegenstand 14 ein. Dies ist besonders vorteilhaft beim Behandeln von Kunststoffrohren, die dann schon in zwei Hälften zerfallen. Auch zum Entfernen von Kabelmänteln 25 ist das von Vorteil.

Fig. 6 zeigt in Zugrichtung in Ansicht unter Hinweglassung der Halter 4 und 5 das Rollenpaar 6a und 6b. Die obere Rolle 6a rollt mit ihrer planen Fläche 22 auf dem strangförmigen Gegenstand 14 ab. Die untere Rolle 6b besteht aus den kegeligen Flanschen 7c und 7d, die zwischen sich die Aufnahmemulde 15 ausbilden. Der strangförmige Gegenstand 14 ist zwischen den Rollen 6a und 6b eingeklemmt und wird von der angetriebenen Rolle 6b in das Kerngerät 2 hineingezogen. Selbstverständlich kann auch die Rolle 6a bei Bedarf angetrieben werden.

Fig. 1 zeigt, dass das Kerngerät 2 auf dem Grundrahmen 3 steht. Es wird, wenn es nicht selbstständig betrieben wird, an dem Grundrahmen 3 mittels Verbindern 30 befestigt. Der Grundrahmen 3 trägt auf der Seite 26 eine Entmantelungsstation 27, die den aufgeschlitzten Mantel 25 des aufgeschlitzten Strangabschnittes 14a beispielsweise nach unten wegdrückt. Die Entmantelungsvorrichtung 27 kann aus einem Entmantelungsrad 27a mit einer nicht dargestellten Hohlkehle bestehen.

Auf die Entmantelungsstation 27 folgt eine quer zur Durchzugsrichtung des strangförmigen Gegenstandes 14 arbeitende Querschneidestation 28 mit einem Querschneider 29. Dieser Querschneider 29 kann den durchlaufenden, strangförmigen Gegenstand 14 in Stücke schneiden. Wenn keine Entmantelung gewünscht ist, kann der durchgezogene, strangförmige Gegenstand 14 ohne vorherige Entmantelung durchgeschnitten werden. Der Einsatz der Entmantelungsstation 27 ist wahlweise und nicht zwingend. Ebenso ist aber auch die Querschneidestation 28 nicht zwingend.

Fig. 2 zeigt eine Erweiterung und Abwandlung der Vorrichtung 1. Auf das Kerngerät 2 folgt die Entmantelungsstation 27. Die Querschneidestation 28 ist weggelassen. Nach dem Entmanteln verbleiben bei einem Dreileiterkabel 14 drei ihrerseits wieder ummantelte Kabelstränge 14b. Um bei einem Kupferkabel das Kupfer vollends freizulegen, müssen auch diese Kabelstränge 14b entmantelt werden.

Dafür sind weitere Kerngeräte 2 mit Nachfolgevorrichtungen 2a in nachgeschalteten Entmantelungsstationen 27 und eventuell Querschneidestationen 28 vorgesehen. Bei dieser Behandlung verbleibt zum Schluss das reine Kupfer, das auf dem Markt einen guten Preis erbringt.

Wenn hier von Kupferkabeln 14 die Rede ist, dann können natürlich auch Kabel mit anderen Materialien zur Behandlung anstehen und in gleicher Weise bearbeitet werden.

Wird ein Kunststoffrohr behandelt, dann fällt selbstverständlich die Entmantelungsstation weg. Vielmehr empfiehlt es sich, das zweite Rollenmesser 23 einzusetzen.

## Patentansprüche

1. Verfahren zum Entfernen und Weiterbehandeln von biegsamen, strangförmigen Gegenständen (14), vorzugsweise von Kabeln und Rohren, aus ihren Nutzungs-Lagerorten mittels einer während der Behandlung stationären Halterung (2) mit drehend angetriebenen Rollen (6,7), die paarweise einen strangförmigen Gegenstand (14) zwischen sich klemmend erfassen und beim Drehen aus dem Nutzungs-Lagerort ziehen, wobei der herausgezogene, freigelegte, strangförmige Gegenstand (14) in Längsrichtung mit einem Schneidwerkzeug (23) aufgeschlitzt wird.

2. Verfahren nach Anspruch 1, **dadurch gekennzeichnet, dass** bei einem mit einem Mantel (25) versehenen, strangförmigen Gegenstand (14), beispielsweise bei einem Kabel, im Wesentlichen nur der Mantel (25) aufgeschlitzt und dieser danach bei einem Entmanteln entfernt wird und bei einem rohrförmigen, strangförmigen Gegenstand (14) die Rohrwand (25a) durchschnitten wird.

3. Verfahren nach einem oder mehreren der Ansprüche 1 oder 2, **dadurch gekennzeichnet, dass** die strangförmigen Gegenstände (14) bei Bedarf in Querrichtung mit einer Querschneidevorrichtung (28) durchtrennt werden und dem Recyceln und Entsorgen zugeführt werden.

4. Verfahren nach einem oder mehreren Ansprüchen 1 bis 4, **dadurch gekennzeichnet, dass** für den Fall, dass beim Aufschlitzen weitere strangförmige Gegenstände (14) mit Mänteln (25) freigelegt werden, die wiederum von einem oder mehreren Schneidwerkzeugen in weiteren Nachfolgevorrichtungen (2a) aufgeschlitzt und danach entmantelt werden.

5. Verfahren nach einem oder mehreren der Ansprüche 1 oder 4, **dadurch gekennzeichnet, dass** das Schneidwerkzeug ein mit zumindest einem Rollenpaar (7a,7b) umlaufendes Trennmesser (23) umfasst, mit dem der gerade gezogene, strangförmige Gegenstand (14) in Längsrichtung aufgeschlitzt wird, worauf bei einem strangförmigen Gegenstand (14) mit einem Mantel (25) der durch das Aufschlitzen geöffnete Mantel (25) entfernt wird, und wobei das umlaufende Trennmesser (23) vorzugsweise als in einer Aufnahmemulde oder auf dem äußeren Umfang, vorzugsweise jeweils etwa mittig, zumindest einer Rolle umlaufende Rollenmesser ausgeführt ist.

6. Verfahren nach einem oder mehreren der Ansprüche 1 bis 5, **dadurch gekennzeichnet, dass** von wenigstens einem quer zur Strangrichtung angeordneten Trennmesser (29) der strangförmige Gegenstand (14), insbesondere der freigelegte, strangförmige Gegenstand (14), abschnittsweise durchteilt wird.

7. Vorrichtung aufweisend eine während der Behandlung stationäre Halterung (1,2,4,5), in der zwischen unteren und oberen Rollen (6,7) ein strangförmiger Gegenstand (14) einklemmbar und aus seinem Nutzungs-Lagerort ziehbar ist, wobei zumindest ein Schneidwerkzeug (23) vorgesehen ist, mittels der der herausgezogene, freigelegte, strangförmige Gegenstand (14) mit dem Schneidwerkzeug (23) in Längsrichtung aufschneidbar ist.

8. Vorrichtung nach Anspruch 7, **dadurch gekennzeichnet, dass** bei einem mit einem Mantel (25) versehenen strangförmigen Gegenstand (14) der Mantel (25) vom Schneidwerkzeug (23) zum späteren Entfernen aufschneidbar ist und bei einem rohrförmigen, strangförmigen Gegenstand (14) die Rohrwand (25a) zum späteren Entfernen durchschneidbar ist, wobei das Schneidwerkzeug ein mit einem Rollenpaar (7a,7b) umlaufendes Trennmesser (23) umfasst und das umlaufende Trennmesser (23) vorzugsweise als in einer Aufnahmemulde oder auf dem äußeren Umfang, vorzugsweise jeweils etwa mittig, zumindest einer Rolle umlaufendes Rollenmesser ausgeführt ist.

9. Vorrichtung nach einem oder mehreren der Ansprüche 7 oder 8, **dadurch gekennzeichnet, dass** weiterhin eine Querschneidevorrichtung (28) vorgesehen ist, mit der der strangförmige Gegenstand (14) bei Bedarf quer zur Zugrichtung (Z) des Gegenstandes (14) durchtrennbar ist, wobei die Querschneidevorrichtung (28) vorzugsweise quer zur Strangrichtung angeordnete Trennmesser (29) umfasst.

10. Vorrichtung nach einem oder mehreren der Ansprüche 7 bis 9, **dadurch gekennzeichnet, dass** in einem Kerngerät (2) in der Förderungsfolge hintereinander wenigstens zwei Paare von unteren und oberen Rollen (6,7) vorgesehen sind, von denen wenigstens die unteren angetrieben sind und von denen wenigstens von einem Paar (6,7) eine oder beide Rollen (6,7) mit wenigstens einem Rollenmesser (23) ausgerüstet sind, mit dem die strangförmigen Gegenstände (14) in Längsrichtung beim Ziehvorgang aufschlitzbar sind.

11. Vorrichtung nach einem oder mehreren der Ansprüche 7 bis 10, **dadurch gekennzeichnet, dass** die untere und gegebenenfalls auch die obere Rolle (6) wenigstens eines Rollenpaares eine Aufnahmemulde (15) für die Aufnahme und das Einschließen des strangförmigen Gegenstandes (14) aufweist und die Muldenwände (7a,7c) vorzugsweise mit Greifstrukturen (7e), wie beispielsweise Quer- und Längsrillen sowie Noppen, versehen sind.

12. Vorrichtung nach einem oder mehreren der Ansprüche 7 bis 11, **dadurch gekennzeichnet, dass** sich in Nachfolgevorrichtungen (2a) an die Rollenpaare (6,7) weitere Rollenpaare anschließen, die den aufgeschlitzten und in Teilgegenstände (14b) aufgespaltenen Gegenstand (14) nochmals in Längsrichtung aufschlitzen.

13. Vorrichtung nach einem oder mehreren der Ansprüche 7 bis 12, **dadurch gekennzeichnet, dass** in der Förderungsfolge nach dem Kerngerät (2) eine Entmantelungsstation (27) vorgesehen ist und die Entmantelungsstation (27) insbesondere ein Entmantelungsrad (27a) mit einer Hohlkehle aufweist, mit dem der aufgeschlitzte Mantel (25) vom Kabel (14) wegdrückbar ist.

14. Vorrichtung nach einem oder mehreren der Ansprüche 8 bis 13, **dadurch gekennzeichnet, dass** ein Querschneider (29) der Querschneidestation (28) auf das Kerngerät (2) und vorzugsweise auch auf die Entmantelungsstation folgend angeordnet ist.

15. Vorrichtung nach einem oder mehreren der Ansprüche 8 bis 14, **dadurch gekennzeichnet, dass** in dem Kerngerät (2) die unteren Rollen (6b,7b) in einem unteren Rollenhalter (4) gelagert sind und die oberen Rollen (6a,7a) in einem oberen Gegenrollenhalter (5) gelagert sind, der vom unteren Rollenhalter (4) lös- und abnehmbar ist, wobei die Höhenlage der Rollen (6a,7a) im Gegenrollenhalter (5) gegenüber den Rollen (6b,7b) in dem unteren Rollenhalter (4) vorzugsweise einstellbar ist und unabhängig hiervon insbesondere die Achsen (9) der oberen Rollen (6a,7a) des Gegenrollenhalters (5) an jeweils den einen Enden (10) von Trägern (11) angeordnet sind, während die anderen Enden (12) zusammengeführt sind und an einem mittigen Gelenk (13) angreifen, das lösbar mit dem unteren Rollenhalter (4) verbunden ist.

16. Vorrichtung nach Anspruch 15, **dadurch gekennzeichnet, dass** eine in ihrer Länge veränderbare Spannvorrichtung (16) vorgesehen ist, die die Träger (11) im Bereich der Achsen (9) der Rollen (6a,7a) im Gegenrollenhalter (5) verbindet, wobei durch eine Längung der Spannvorrichtung (16) die oberen Rollen (6a,7a) mehr an die unteren Rollen (6b,7b), oder umgekehrt, annäherbar und bei einer Verkürzung die oberen Rollen (6a,7a) mehr von den unteren Rollen (6b,7b) , oder umgekehrt, entfernbar sind und der Rollenhalter (4) und der Gegenrollenhalter (5) vorzugsweise gemeinsam mit den Rollen (6,7) und der Spannvorrichtung (16) als einzeln handhabbare Einheit ausgebildet sind.
